# EUROPEAN PATENT APPLICATION

(11) **EP 2 871 618 A1**
(43) Date of publication of application: **13.05.2015**
(21) Application number: 14189972.4
(22) Date of filing: 22.10.2014
(51) Int. Cl.: G07G 1/00, G06Q 20/20, G06Q 20/32

(54) **Self-checkout shopping system**

(30) Priority: 08.11.2013 US 201314074746
(71) Applicant: Hand Held Products, Inc., Fort Mill, SC 29707 (US)
(72) Inventor: Hejl, Benjamin, Morristown, NJ 07962-2245 (US); Williams, Timothy, Morristown, NJ 07962-2245 (US); Gao, Jianfeng, Morristown, NJ 07962-2245 (US); Jin, Hong Jian, Morristown, NJ 07962-2245 (US); Zhou, Xiaodong, Morristown, NJ 07962-2245 (US); Zhu, Qi, Morristown, NJ 07962-2245 (US); Yuan, Zhiqiang, Morristown, NJ 07962-2245 (US); Qu, Huyu, Morristown, NJ 07962-2245 (US); Patel, Mehul, Morristown, NJ 07962-2245 (US); Wang, Ynjiun Paul, Morristown, NJ 07962-2245 (US); Xian, Tao, Morristown, NJ 07962-2245 (US)
(74) Representative: Houghton, Mark Phillip

(57) **Abstract**

A self-checkout shopping system improves the retail shopping experience, permitting the self-serve customer to perform checkout tasks that are typically performed at the retailer's checkout area as the customer is selecting items for purchase. The system includes a mobile computer device and an indicia reader. The customer uses the mobile computer device to scan items selected for purchase. The item numbers are then compiled onto a list of acquired merchandise. When the customer has finished shopping, the system transmits the list of acquired merchandise, and any additional information such as customer financial information, to a point-of-sale terminal to facilitate the customer's payment for the merchandise.

## Description

### FIELD OF THE INVENTION

The present invention relates to the field of information systems and, more specifically, to a self-checkout shopping system.

### BACKGROUND

From a consumer perspective, the retail shopping experience has undergone significant transformations in the past few decades.

Manually-affixed price tags were once a centerpiece of the retail shopping experience. Store personnel would affix pricing labels to the merchandise, and when the pricing changed, the store personnel had to apply new pricing labels.

At checkout, store clerks would manually enter prices at the cash register by typing in the price reflected on the pricing label. This approach resulted in inefficiencies due to the substantial amount of time required to apply and re-apply pricing labels to merchandise, as well as the data entry errors that often occurred when manually entering pricing information into the cash register.

A large percentage of retailers, notably grocery stores and general consumer merchandisers, have come to rely on barcode technology to improve the efficiency and reliability of their operations. Many retailers have eschewed individually applying price tags to their wares in favor of relying on code symbols applied to product packaging or to the product at the manufacturing stage.

When entering pricing information at the point-of-sale, a product barcode is scanned by a barcode scanner and the product price is automatically entered into the point-of-sale system. This approach has proven so efficient and reliable that many retailers have implemented self-checkout systems whereby consumers themselves enter the pricing information by scanning their purchased goods at the point of sale. Consumers can also pay for the merchandise, often without the need for assistance from the retailer's personnel, by depositing money or entering credit card information into the point-of-sale system.

As demonstrated by the fact that self-checkout systems have become commonplace at many grocery stores and general merchandise retailers, these systems are popular with retailers and consumers alike due to their relative reliability, speed, and ease of use. When large numbers of items are being purchased, however, the checkout process tends to be more time consuming than consumers and retailers would like. For example, waiting in line while other shoppers self-scan shopping carts full of groceries can take a significant amount of time, thereby detracting from the consumer's overall shopping experience.

Therefore, a need exists for a self-checkout shopping systems that allow shoppers to enter pricing information into a point-of-sale system and pay for the purchased goods in a more efficient manner.

### SUMMARY

Accordingly, in one aspect, the present invention embraces a self-checkout shopping system that includes a mobile computer device for maintaining a list of acquired merchandise. The mobile computer device includes an indicia reader (e.g., a code-symbol reader) that is configured for reading indicia (e.g., code symbols) associated with merchandise. The self-checkout shopping system also includes a point-of-sale terminal configured to wirelessly communicate with the mobile computer device. The self-checkout shopping system is configured to transmit the list of acquired merchandise from the mobile computer device to the point-of-sale terminal.

In an exemplary embodiment, the mobile computer device and the point-of-sale terminal are configured to exchange information associated with the purchase of merchandise in response to a user action.

In another exemplary embodiment, the mobile computer device and the point-of-sale terminal are configured to exchange information associated with the purchase of merchandise in response to a user (i) selecting an option to checkout on the mobile computer device, (ii) using the indicia reader to identify checkout indicia, and/or (*iii*) leaving the vicinity of the point-of-sale terminal.

In yet another exemplary embodiment, the mobile computer device is configured to update a list of acquired merchandise when the mobile computer device's indicia reader decodes a code symbol associated with merchandise selected by a shopper.

In yet another exemplary embodiment, the mobile computer device is associated with a shopping container (e.g., a shopping cart with an integrated computer), and the mobile computer device's indicia reader includes an RFID reader that is configured to read RFID tags associated with merchandise that is placed in the shopping container.

In yet another exemplary embodiment, the mobile computer device is configured for displaying indicia associated with the list of acquired merchandise. The point-of-sale terminal includes an indicia reader that is configured for reading the indicia associated with the list of acquired merchandise as displayed by the mobile computer device.

In yet another exemplary embodiment, both the mobile computer device and the point-of-sale terminal are enabled with near-field-communication (NFC) capabilities.

In yet another exemplary embodiment, the NFC-enabled mobile computer device is configured to transmit information associated with (i) the list of acquired merchandise and/or (ii) payment information. The NFC-enabled point-of-sale terminal is configured to receive information associated with (i) the list of acquired merchandise and/or (ii) payment information.

In yet another exemplary embodiment, the NFC-enabled point-of-sale terminal is configured to transmit information associated with the purchase of merchandise.

In yet another exemplary embodiment, the NFC-enabled mobile computer device is configured to receive information associated with the purchase of merchandise as transmitted by the NFC-enabled point-of-sale terminal.

In yet another exemplary embodiment, the mobile computer device is a smartphone or tablet computer (e.g., a smartphone with a checkout software application, and optionally stored credit-card or store-loyalty information).

In another aspect, the present invention embraces a near-field-communication (NFC), self-checkout shopping system that includes an NFC-enabled mobile computer device. The system also includes an NFC-enabled point-of-sale terminal configured to communicate with the mobile computer device. The self-checkout shopping system is configured to exchange information associated with the purchase of merchandise between the NFC-enabled mobile computer device and the NFC-enabled point-of-sale terminal when the NFC-enabled mobile computer device is positioned in proximity to the NFC-enabled point-of-sale terminal.

In an exemplary embodiment, the NFC-enabled mobile computer device is configured to transmit information associated with payment for merchandise. The NFC-enabled point-of-sale terminal is configured to receive information associated with payment for merchandise.

In another exemplary embodiment, the NFC-enabled mobile computer device is configured to encrypt and transmit information associated with payment for merchandise. The NFC-enabled point-of-sale terminal is configured to receive and de-crypt information associated with payment for merchandise.

In yet another exemplary embodiment, the NFC-enabled point-of-sale terminal is configured to transmit information associated with the purchase of merchandise.

In yet another exemplary embodiment, the NFC-enabled mobile computer device is configured to receive information associated with the purchase of merchandise.

In yet another exemplary embodiment, the NFC-enabled mobile computer device is associated with a shopping container.

In another aspect, the present invention embraces a near-field-communication (NFC), self-checkout shopping system that includes an NFC-enabled indicia reader configured for (i) decoding indicia associated with merchandise, (ii) acquiring information associated with the decoded indicia from a database, and (*iii*) transmitting the information associated with the decoded indicia to a second NFC-enabled device.

In an exemplary embodiment, the second NFC-enabled device is a point-of-sale terminal.

In yet another exemplary embodiment, the NFC-enabled indicia reader and the NFC-enabled point-of-sale terminal are configured to exchange information associated with the purchase of merchandise when the NFC-enabled indicia reader is positioned in proximity to the NFC-enabled point-of-sale terminal.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 is a block diagram illustrating components of an exemplary self-checkout shopping system according to the present invention.
Figure 2 is a block diagram illustrating an exemplary near-field-communication (NFC) self-checkout shopping system according to the present invention.

### DETAILED DESCRIPTION

The present invention embraces self-checkout shopping systems. The systems improve the retail shopping experience by leveraging the technology of modern mobile computer devices (e.g., smartphones, tablet computers, laptop computers, etc.). In particular, the systems permit a user (i.e., a retail shopper, customer, etc.) to perform many checkout tasks that are currently performed at the retailer's checkout area (e.g., checkout lane) as the customer is selecting items for purchase.

Using a mobile computer device equipped with the appropriate hardware and software, the customer may scan (e.g., read) each selected item as that item is selected for purchase and placed into a shopping container (e.g., shopping cart, shopping basket, etc.) thereby adding the item onto a list of acquired merchandise. When the customer has finished shopping, the system transmits the list of acquired merchandise to a point-of-sale terminal to facilitate the customer's payment for the merchandise.

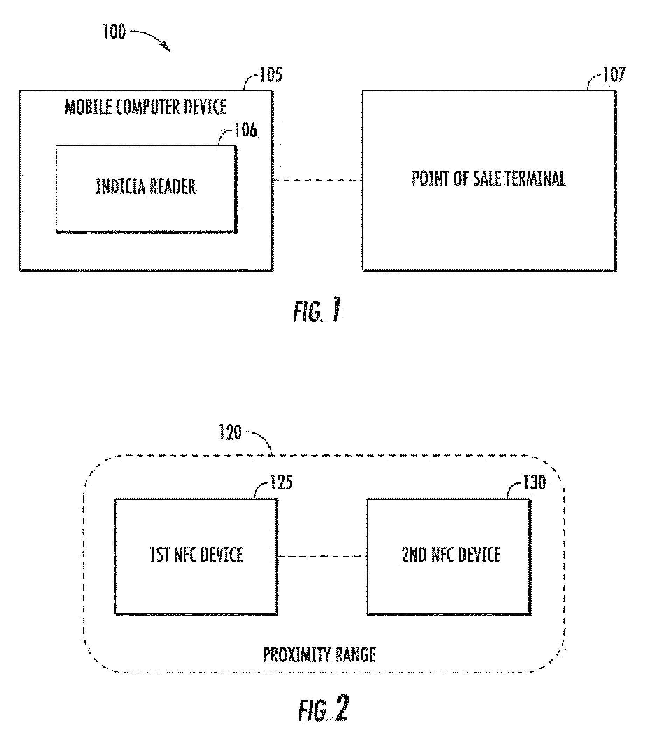

Referring now to Figure 1, the self-checkout shopping system 100 includes a mobile computer device 105. The mobile computer device 105 may be a smartphone, a tablet computer, a laptop computer, or any other computing device that is portable (i.e., able to be transported by the customer around the retail store as the customer shops for merchandise). The mobile computing device 105 may also be a computing device that is a component of any apparatus designed to assist the customer with the shopping experience. For instance, in order to improve the shopping experience the retailer may provide the customer with a shopping cart or other shopping container that incorporates a mobile computer device 105.

The mobile computer device 105 includes an indicia reader 106 (e.g., a laser scanner, image code reader, RFID reader, etc.) that is configured for reading indicia or any other type of identification associated with merchandise. The term "indicia" is intended to refer broadly to various kinds of machine-readable indicia, including barcodes, QR codes, matrix codes, 1D codes, 2D codes, RFID tags, IR tags, characters, etc. The indicia are typically graphical representations of information (e.g., data), such as product numbers, package tracking numbers, or personnel identification numbers.

The term "indicia" as used herein is also intended to refer broadly to visual characteristics of merchandise for which image recognition technology (e.g., Google Goggles by Google, Inc.) may be used with an indicia reader to identify an item. The use of indicia readers to input data into a system, rather than manual data entry, results in generally faster and more reliable data entry.

The indicia reader 106 may be a laser barcode scanner. More typically, the indicia reader 106 may be the mobile computing device's imaging device module (e.g., camera module), which is configured to capture images of indicia (e.g., code symbols) and process the indicia image to decode (e.g., read) the indicia.

When an indicium is decoded (or read), the indicia is translated from its symbol form into the information (e.g., data) that the indicia represents. In the retail store environment, this typically means that when the indicia is decoded by the indicia reader 106, the indicia is translated from a graphical representation (e.g., black and white vertical bars of varying widths in the case of UPC barcodes) or other type of identification (e.g., radio-frequency identification (RFID)) into alphanumeric data relating to the item (e.g., product number, product price, etc.).

In an exemplary embodiment, the mobile computer device 105 is equipped with the appropriate software (e.g., decoding software) such that when the customer scans or reads each item selected for purchase, the item number may be compiled onto a list of acquired merchandise. The list of acquired merchandise may be updated when the mobile computer device's indicia reader 106 scans and decodes additional merchandise selected by a customer. Alternatively, a web-based service may be used to create a shopping list that could be delivered to the mobile computer device 105 such that the items are "checked off" of the shopping list as the indicia reader 106 scans the items of merchandise. Shopping ads or coupons may be transmitted to the mobile computer device 105 based upon the shopping list or based upon items that were previously purchased by the customer.

As illustrated at Figure 1, the mobile computer device 105 is configured to transmit the list of acquired merchandise from the mobile computer device 105 to a point-of-sale terminal 107 when the mobile computer device 105 is positioned within a certain distance of the point-of-sale terminal 106. The list of acquired merchandise may be transmitted using any conventional communication system (e.g., Wi-Fi, BLUETOOTH, etc.). The list of acquired merchandise may also be transmitted by displaying an indicium associated with the list of acquired merchandise that is then read by an indicia reader that is associated with the point-of-sale terminal 107.

In addition to information associated with the items selected for purchase (e.g., item number, product pricing, etc.), the mobile computer device 105 may also be configured to transmit payment information to the point-of-sale 107 terminal. In this regard, the customer may upload payment information, such as credit card or debit card information, that will be transmitted to the point-of-sale terminal 107 in order to complete the purchase. Conversely, the point-of-sale terminal 107 may be configured to receive and process the customer's payment information and transmit a paperless receipt to the mobile computer device 105 documenting payment (e.g., an email receipt).

The payment and checkout process may be implemented in a number of ways. By way of example, the customer may begin the process by selecting an option to checkout on the mobile computer device or by using the indicia reader to identify checkout indicia. The payment and checkout process may also be configured to begin automatically when a customer leaves a shopping area or some other location (i.e., using geo-fencing technology).

The payment and checkout process may be further streamlined if the customer has setup an account (e.g., an online account) with a registered credit card or debit card which can be repeatedly accessed for payment. The customer account could also be used to verify a customer's age (e.g., when alcoholic beverages are selected by a customer for purchase).

Modern smartphones and other mobile computing devices (e.g., tablet computer, laptop computer, etc.) may be configured to utilize near-field communication. For instance, the Android™ smartphone operating platform has near-field communication functionality. In this regard, the system 100 of the present invention (including all of the aspects and features previously set forth) may operate as a near-field-communication (NFC) system 120 as illustrated at Figure 2.

NFC is a communication protocol that allows mobile electronic devices such as smartphones to establish wireless communications with each other using electromagnetic radio fields instead of conventional radio communications typically utilized in similar communication networks (e.g., Wi-Fi, BLUETOOTH, etc.). The NFC communication link may be initiated when two NFC-capable devices touch or are otherwise brought into proximity with each other as illustrated at Figure 2. It will be appreciated by a person of ordinary skill in the art that NFC devices are in proximity to each other when they are either (i) physically contacting each other or (ii) within the maximum range that NFC transmissions may successfully be exchanged.

The NFC protocol can create a personal area network between NFC-capable devices similar to other personal area network technologies (e.g., BLUETOOTH). The advantage of using the NFC protocol is that it requires much less time to establish a connection between devices using the NFC protocol. Using NFC makes the process of transferring information from one device to another device is much quicker and simpler than other communication techniques.

Based upon NFC standards, 13.56 MHz is typically used to communicate and exchange data. NFC standards use some existing passive RFID standards from recognized standards organizations (e.g., International Organization for Standardization (ISO), EPCglobal, NFC forum, etc.) and include ISO/IEC 14443, ISO 15693, and ISO/IEC 18000.

The near-field-communication system 120 according to the present invention includes a first NFC-enabled device 125 configured to send acquired information (e.g., product information, customer payment information, etc.) to another NFC-enabled device. In general, the first NFC-enabled device 125 may be an active device in that it can both receive and send information using NFC. The first NFC-enabled device may be the mobile computer device 105 illustrated at Figure 1 and described above and may include an indicia reader.

The near-field-communication (NFC) system 120 according to the present invention may also include a second NFC-enabled device 130. The second NFC-enabled device 130 may be the point-of-sale terminal 106 illustrated at Figure 1 and described above. The second NFC-enabled device 130 could be a passive NFC device in that it only needs to receive acquired information via the NFC communication link. Typically, however, the second NFC-enabled device 130 will be an active NFC device capable of sending and receiving data over an NFC communication link.

Using a first NFC-enabled device 125 equipped with the appropriate hardware (e.g., a high-pixel camera, near-field communication module, etc.) and software (e.g. proprietary decoding software), a customer may scan items selected for purchase as those items are placed into a shopping container. When the customer has finished shopping, the system 120 transmits the acquired merchandise information, and potentially additional information such as customer payment information, to a second NFC-enabled device 130 (e.g., a point-of-sale terminal) configured with the appropriate hardware and software to receive the information and to facilitate the customer's payment for the merchandise.

Due to concerns regarding data security, credit card (or debit card) information may not be directly transmitted in the transaction. The system 120 may incorporate data encryption modules using cryptographic protocols for communication (e.g., Transport Layer Security (TLS), Secure Sockets Layer (SSL), etc.). The cryptographic information (e.g., credit card information) would be transmitted using NFC. The information would then be received by a point-of-sale terminal and de-encrypted. The purchase could then be completed using the credit card information. Consequently, the customer can check out quickly and may receive an electronic receipt through NFC

By relying on NFC, time spent pairing a mobile computer device using other personal area network technologies (e.g., BLUETOOTH) is avoided and the customer check out process is improved.

To supplement the present disclosure, this application incorporates entirely by reference the following patents, patent application publications, and patent applications: U.S. Patent No. 6,832,725; U.S. Patent No. 7,159,783; U.S. Patent No. 7,128,266; U.S. Patent No. 7,413,127; U.S. Patent No. 7,726,575; U.S. Patent No. 8,390,909; U.S. Patent No. 8,294,969; U.S. Patent No. 8,408,469; U.S. Patent No. 8,408,468; U.S. Patent No. 8,381,979; U.S. Patent No. 8,408,464; U.S. Patent No. 8,317,105; U.S. Patent No. 8,366,005; U.S. Patent No. 8,424,768; U.S. Patent No. 8,322,622; U.S. Patent No. 8,371,507; U.S. Patent No. 8,376,233; U.S. Patent No. 8,457,013; U.S. Patent No. 8,448,863; U.S. Patent No. 8,459,557; U.S. Patent No. 8,469,272; U.S. Patent No. 8,474,712; U.S. Patent No. 8,479,992; U.S. Patent No. 8,490,877; U.S. Patent No. 8,517,271; U.S. Patent No. 8,556,176 U.S. Patent No. 8,561,905; U.S. Patent No. 8,523,076; U.S. Patent No. 8,528,819; U.S. Patent Application Publication No. 2012/0111946; U.S. Patent Application Publication No. 2012/0223141; U.S. Patent Application Publication No. 2012/0193423; U.S. Patent Application Publication No. 2012/0203647; U.S. Patent Application Publication No. 2012/0248188; U.S. Patent Application Publication No. 2012/0228382; U.S. Patent Application Publication No. 2012/0193407; U.S. Patent Application Publication No. 2012/0168511; U.S. Patent Application Publication No. 2012/0168512; U.S. Patent Application Publication No. 2010/0177749; U.S. Patent Application Publication No. 2010/0177080; U.S. Patent Application Publication No. 2010/0177707; U.S. Patent Application Publication No. 2010/0177076; U.S. Patent Application Publication No. 2009/0134221; U.S. Patent Application Publication No. 2012/0318869; U.S. Patent Application Publication No. 2013/0043312; U.S. Patent Application Publication No. 2013/0068840; U.S. Patent Application Publication No. 2013/0070322; U.S. Patent Application Publication No. 2013/0075168; U.S. Patent Application Publication No. 2013/0056285; U.S. Patent Application Publication No. 2013/0075464; U.S. Patent Application Publication No. 2013/0082104; U.S. Patent Application Publication No. 2010/0225757; U.S. Patent Application Publication No. 2013/0175343; U.S. Patent Application No. 13/347,193 for a *Hybrid-Type Bioptical Laser Scanning And Digital Imaging System Employing Digital Imager With Field Of View Overlapping Field Of Field Of Laser Scanning Subsystem,* filed January 10, 2012 (Kearney et *al.);* U.S. Patent Application No. 13/367,047 for *Laser Scanning Modules Embodying Silicone Scan Element With Torsional Hinges,* filed February 6, 2012 (Feng et *al.);* U.S. Patent Application No. 13/400,748 for a *Laser Scanning Bar Code Symbol Reading System Having Intelligent Scan Sweep Angle Adjustment Capabilities Over The Working Range Of The System For Optimized Bar Code Symbol Reading Performance,* filed February 21, 2012 (Wilz); U.S. Patent Application No. 13/432, 197 for a *Laser Scanning System Using Laser Beam Sources For Producing Long And Short Wavelengths In Combination With Beam-Waist Extending Optics To Extend The Depth Of Field Thereof While Resolving High Resolution Bar Code Symbols Having Minimum Code Element Widths,* filed March 28, 2012 (Havens et *al.);* U.S. Patent Application No. 13/492,883 for a *Laser Scanning Module With Rotatably Adjustable Laser Scanning Assembly,* filed June 10, 2012 (Hennick et *al.);* U.S. Patent Application No. 13/367,978 for a *Laser Scanning Module Employing An Elastomeric U-Hinge Based Laser Scanning Assembly,* filed February 7, 2012 (Feng et *al.);* U.S. Patent Application No. 13/852,097 for a *System and Method for Capturing and Preserving Vehicle Event Data,* filed March 28, 2013 (Barker et *al.);* U.S. Patent Application No. 13/780,356 for a *Mobile Device Having Object-Identification Interface,* filed February 28, 2013 (Samek et *al.);* U.S. Patent Application No. 13/780,158 for a *Distraction Avoidance System,* filed February 28, 2013 (Sauerwein); U.S. Patent Application No. 13/784,933 for an *Integrated Dimensioning and Weighing System,* filed March 5, 2013 (McCloskey et *al.);* U.S. Patent Application No. 13/785,177 for a *Dimensioning System,* filed March 5, 2013 (McCloskey et *al.*); U.S. Patent Application No. 13/780,196 for *Android Bound Service Camera Initialization,* filed February 28, 2013 (Todeschini et *al.);* U.S. Patent Application No. 13/792,322 for a *Replaceable Connector,* filed March 11, 2013 (Skvoretz); U.S. Patent Application No. 13/780,271 for a *Vehicle Computer System with Transparent Display,* filed February 28, 2013 (Fitch et *al.);* U.S. Patent Application No. 13/736,139 for an *Electronic Device Enclosure,* filed January 8, 2013 (Chaney); U.S. Patent Application No. 13/771,508 for an *Optical Redirection* Adapter, filed February 20, 2013 (Anderson); U.S. Patent Application No. 13/750,304 for *Measuring Object Dimensions Using Mobile Computer,* filed January 25, 2013; U.S. Patent Application No. 13/471,973 for *Terminals and Methods for Dimensioning Objects,* filed May 15, 2012; U.S. Patent Application No. 13/895,846 for a *Method of Programming a Symbol Reading System,* filed April 10, 2013 (Corcoran); U.S. Patent Application No. 13/867,386 for a *Point of Sale (POS) Based Checkout System Supporting a Customer-Transparent Two-Factor Authentication Process During Product Checkout Operations,* filed April 22, 2013 (Cunningham et *al.*); U.S. Patent Application No. 13/888,884 for an *Indicia Reading System Employing Digital Gain Control,* filed May 7, 2013 (Xian et *al.);* U.S. Patent Application No. 13/895,616 for a *Laser Scanning Code Symbol Reading System Employing Multi-Channel Scan Data Signal Processing with Synchronized Digital Gain Control (SDGC) for Full Range Scanning,* filed May 16, 2013 (Xian et *al.);* U.S. Patent Application No. 13/897,512 for a *Laser Scanning Code Symbol Reading System Providing Improved Control over the Length and Intensity Characteristics of a Laser Scan Line Projected Therefrom Using Laser Source Blanking Control,* filed May 20, 2013 (Brady et *al.);* U.S. Patent Application No. 13/897,634 for a *Laser Scanning Code Symbol Reading System Employing Programmable Decode Time-Window Filtering,* filed May 20, 2013 (Wilz, Sr. et *al.);* U.S. Patent Application No. 13/902,242 for a *System For Providing A Continuous Communication Link With A Symbol Reading Device,* filed May 24, 2013 (Smith et *al.*); U.S. Patent Application No. 13/902,144, for a *System and Method for Display of Information Using a Vehicle-Mount Computer,* filed May 24, 2013 (Chamberlin); U.S. Patent Application No. 13/902,110 for a *System and Method for Display of Information Using a Vehicle-Mount Computer,* filed May 24, 2013 (Hollifield); U.S. Patent Application No. 13/912,262 for a *Method of Error Correction for 3D Imaging Device,* filed June 7, 2013 (Jovanovski et *al.*); U.S. Patent Application No. 13/912,702 for a *System and Method for Reading Code Symbols at Long Range Using Source Power Control,* filed June 7, 2013 (Xian et *al.);* U.S. Patent Application No. 13/922,339 for a *System and Method for Reading Code Symbols Using a Variable Field of View,* filed June 20, 2013 (Xian et *al.*); U.S. Patent Application No. 13/927,398 for a *Code Symbol Reading System Having Adaptive Autofocus,* filed June 26, 2013 (Todeschini); U.S. Patent Application No. 13/930,913 for a *Mobile Device Having an Improved User Interface for Reading Code Symbols,* filed June 28, 2013 (Gelay *et al.);* U.S. Patent Application No. 13/933,415 for an *Electronic Device Case,* filed July 2, 2013 (London et *al.);* U.S. Patent Application No. 13/947,296 for a *System and Method for Selectively Reading Code Symbols,* filed July 22, 2013 (Rueblinger et *al.);* U.S. Patent Application No. 13/950,544 for a *Code Symbol Reading System Having Adjustable Object Detection,* filed July 25, 2013 (Jiang); U.S. Patent Application No. 13/961,408 for a *Method for Manufacturing Laser Scanners,* filed August 7, 2013 (Saber et *al.);* U.S. Patent Application No. 13/973,315 for a *Symbol Reading System Having Predictive Diagnostics,* filed August 22, 2013 (Nahill et *al.*); U.S. Patent Application No. 13/973,354 for a *Pairing Method for Wireless Scanner via RFID,* filed August 22, 2013 (Wu *et al.);* U.S. Patent Application No. 13/974,374 for *Authenticating Parcel Consignees with Indicia Decoding Devices,* filed August 23, 2013 (Ye et *al.);* U.S. Patent Application No. 14/018,729 for a *Method for Operating a Laser Scanner,* filed September 5, 2013 (Feng et *al.);* U.S. Patent Application No. 14/019,616 for a *Device Having Light Source to Reduce Surface Pathogens,* filed September 6, 2013 (Todeschini); U.S. Patent Application No. 14/023,762 for a *Handheld Indicia Reader Having Locking Endcap,* filed September 11, 2013 (Gannon); and U.S. Patent Application No. 14/035,474 for *Augmented-Reality Signature Capture,* filed September 24, 2013 (Todeschini).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A self-checkout shopping system, comprising:
a mobile computer device for maintaining a list of acquired merchandise, the mobile computer device comprising an indicia reader that is configured for reading indicia associated with merchandise; and
a point-of-sale terminal configured to wirelessly communicate with the mobile computer device;
wherein the self-checkout shopping system is configured to transmit the list of acquired merchandise from the mobile computer device to the point-of-sale terminal.

2. The self-checkout shopping system according to Claim 1, wherein the mobile computer device and the point-of-sale terminal are configured to exchange information associated with the purchase of merchandise in response to a user action.

3. The self-checkout shopping system according to Claim 1, wherein the mobile computer device and the point-of-sale terminal are configured to exchange information associated with the purchase of merchandise in response to a user (i) selecting an option to checkout on the mobile computer device, (ii) using the indicia reader to identify checkout indicia, and/or (*iii*) leaving the vicinity of the point-of-sale terminal.

4. The self-checkout shopping system according to Claim 1, wherein the mobile computer device is configured to update a list of acquired merchandise when the mobile computer device's indicia reader decodes merchandise selected by a shopper.

5. The self-checkout shopping system according to Claim 4, wherein the mobile computer device is associated with a shopping container, and the mobile computer device's indicia reader comprises an RFID reader that is configured to read RFID tags associated with merchandise that is placed in the shopping container.

6. The self-checkout shopping system according to Claim 1, wherein:
the mobile computer device is configured for displaying indicia associated with the list of acquired merchandise; and
the point-of-sale terminal comprises an indicia reader that is configured for reading the indicia associated with the list of acquired merchandise as displayed by the mobile computer device.

7. The self-checkout shopping system according to Claim 1, wherein both the mobile computer device and the point-of-sale terminal are enabled with near-field-communication (NFC).

8. The self-checkout shopping system according to Claim 7, wherein:
the NFC-enabled mobile computer device is configured to transmit information associated with (i) the list of acquired merchandise and/or (ii) payment information; and
the NFC-enabled point-of-sale terminal is configured to receive information associated with (i) the list of acquired merchandise and/or (ii) payment information.

9. The self-checkout shopping system according to Claim 8, wherein the NFC-enabled point-of-sale terminal is configured to transmit information associated with the purchase of merchandise.

10. The self-checkout shopping system according to Claim 9, wherein the NFC-enabled mobile computer device is configured to receive information associated with the purchase of merchandise as transmitted by the NFC-enabled point-of-sale terminal.

11. The self-checkout shopping system according to Claim 1, wherein the mobile computer device is a smartphone or tablet computer.
